# EUROPEAN PATENT SPECIFICATION

(11) **EP 2 142 481 B1**
(45) Date of publication and mention of the grant of the patent: **10.10.2012**
(21) Application number: 08736798.3
(22) Date of filing: 28.03.2008
(51) Int. Cl.: C03B 5/20, C03B 7/02, C03B 37/05

(54) **METHOD FOR SEPARATING SOLID PIECES FROM MINERAL MELT AND SEPARATING DEVICE**
VERFAHREN ZUR ABTRENNUNG VON FESTEN STÜCKEN AUS EINER MINERALSCHMELZE SOWIE ABTRENNUNGSVORRICHTUNG
PROCÉDÉ DE SÉPARATION DE MORCEAUX SOLIDES À PARTIR D'UNE MASSE FONDUE MINÉRALE ET DISPOSITIF DE SÉPARATION

(30) Priority: 28.03.2007 FI 20070250
(43) Date of publication of application: 13.01.2010
(73) Proprietor: Paroc Oy Ab, 01300 Vantaa (FI)
(72) Inventor: LAURÉN, Peter, FI-21600 Pargas (FI)
(74) Representative: Suominen, Kaisa Liisa
(86) International application number: PCT/FI2008/050149
(87) International publication number: WO 2008/116974

(56) References cited:
- JP-A- 61 021 924
- US-A- 4 664 691

## Description

The present invention relates to a method and a device for separating solid pieces from mineral melt, according to the preambles of the claims below.

Mineral wool, such as stone wool, is manufactured by melting mineral rich raw materials, such as diabase, limestone and/or slag in furnaces, for example cupola furnaces. The mineral melt obtained is led out from the melting furnace in the form of a melt jet to a fiberising apparatus, such as a spinning machine, where the melt is formed into mineral fibres.

Different kinds of trough constructions may be used to feed mineral melt from the melting furnace to the fiberising apparatus. The problem is that the mineral melt can sometimes contain solid pieces, such as unburned coke pieces, which emerge from the melting furnace together with the mineral melt. These solid pieces can cause holes in the finished fibre product by burning away the surrounding binder or otherwise disturb the quality of the finished fibre product.

Document US 4,664,691 discloses a method and apparatus for continuously supplying fibre forming mineral material in a fibre producing apparatus. In order to regularise the supply of melt to the fibre-forming apparatus, the melt passes through a reserve before discharging the melt to the fiberising apparatus.

Patent publication JP 61021924 discloses an optical glass melting device comprising a filter, which has small holes with a diameter within a specified range. The filter is arranged between a melting tank and a clarifying tank to prevent mixing of intruded material from refractory material.

Therefore, the object of this invention is to provide a method and an apparatus for the feeding of mineral melt, where the above-mentioned disadvantages are minimised.

The object is thereby to provide a method and a device, with which solid pieces easily and without trouble can be separated from the mineral melt.

These objects are attained with a method and a device having the characteristics presented in the characterising part of the independent claims below.

A typical method for removing solid pieces from a flow of mineral melt according to the present invention is described in claim 1. In the method
- mineral melt is led out from the melting furnace through an opening,
- mineral melt is transported using a leading means, such as an open melt trough, to a fiberising apparatus, and
- the mineral melt is led from the melting furnace first to a separating device, which separates solid pieces from the mineral melt before it is led to the leading means.

A typical device according to the present invention is described in claim 4. The device for separating solid pieces from mineral melt comprises
an elongated open leading means, along which mineral melt is led from a melting furnace to a fiberising apparatus in the longitudinal direction of the leading means, and
a separating device in the form of a trough, the longitudinal direction of which coincides with the longitudinal direction of the leading means, and wherein has been arranged a slit in the longitudinal direction of the trough, whereby the separating device has been arranged so that the melt from the melting furnace is led first to the separating device before it is led to the leading means.

The device according to the present invention is typically used in the manufacture of mineral fibres.

Now it has surprisingly been discovered that solid pieces, such as unburned coke pieces, can easily and simply be separated from the mineral melt by leading the melt flow from the melting furnace through the slit of a separating device before it is led to a leading means, which then leads the melt to a fiberising apparatus. The separating device can easily be formed as a trough, wherein a slit has been arranged in the longitudinal direction of the trough, which direction usually coincides with the flow direction of the melt in the separating device. When mineral melt is fed into the separating device, the melt runs through the slit to the leading means, wherefrom the melt is then led along the leading means to the fiberising apparatus. Solid pieces, which possibly emerge from the melting furnace, get stuck in the separating device if they do not fit through the opening of the slit. In this manner solid pieces above a certain size can quickly and effectively be separated and removed from the mineral melt.

According to the invention the mineral melt is thus taken out from the melting furnace through an opening to a separating device, which is open to the environment substantially along its entire length. The separating device is placed on an open leading means so that the longitudinal directions of the separating device and the leading means coincide with each other. The length of the separating device is at least 20 % of the length of the leading means, typically at least 30 %, more typically at least 35 %, preferably at least 40 %, more preferably at least 55 %, more preferred at least 60 %, more preferably at least 65 % of the length of the leading means. The length of the separating device is however usually shorter than the length of the leading means, but they may also be of the same length. The mineral melt runs along the separating device and through its slit to the leading means, along which leading means the melt runs to a separate fiberising apparatus.

The separating device is elongated and its length coincides with the flow direction of the melt and the longitudinal direction of the leading means. The shape of the separating device can be chosen freely, it can for example be U-shaped. According to an embodiment of the present invention the separating device comprises a first and a second wall, which have been arranged in a V-shape in an angular relationship to each other. If the separating device is arranged in a V-shape, the angle between the first and the second wall is normally 20-160°, typically 45-140°, more typically 90-120°. The walls of the separating device usually comprise solid flat surfaces, which are free from holes.

The slit may naturally be arranged freely in the lower part of the separating device, as long as the melt can flow out through the slit without the separating device becoming too full with melt. In other words the slit does not need to be arranged in the middle of the separating device, on its centre line, but it can also be placed on either of the separating device's side walls. The separating device can also have more than one slit. A V-shaped separating device can for example have two slits, one in the first wall and one in the second wall. In a V-shaped separating device the slit is advantageously arranged between the first and the second wall in the tip of the V.

The width of the slit may be selected on the basis of how large the pieces are that one wishes to separate from the mineral melt. The narrower the slit, the smaller the solid pieces are that get stuck in the separating device, since they do not fit through the slit. Usually the width of the slit, i.e. the size of its opening, is at least 5 mm, typically 5-50 mm, more typically 15-25 mm. The slit is shaped as a uniform elongated opening in the trough that forms the separating device, i.e. the slit does not comprise a number of holes or other such individual openings.

The separating device may be manufactured from ceramics or metal, such as stainless or construction steel. The separating device is preferably not manufactured of noble metal, such as platinum or rhodium. It is possible to arrange the separating device to be cooled down, for example by arranging coolant channels in its walls. In these coolant channels a cooling medium, such as water, may then be circulated, which keeps the temperature of the separating device at a desired level. The length of the separating device in the transport direction of the melt is usually more than 100 mm, typically 300-1500 mm, more typically 700-1000 mm.

The separating device may be arranged on a leading means, such as a melt trough, with the aid of a fastening means. The first end of the fastening means can be fastened to one of the walls of the separating device and the second end can be arranged on a support structure, which is arranged next to the leading means. The separating device can comprise two or three fastening means, which have been fastened to one side of the separating device at a distance from each other in the longitudinal direction of the separating device. On the second opposite wall of the separating device support means can be fastened, which rest on a support structure to give stability to the separating device when it has been arranged on the leading means. Support structures can be fastened to the side of the leading means.

The fastening means may be jointed, so that the separating device can be arranged to be pivotable around a pivot axis in the joint of the fastening means. Another possibility is that the second end of the fastening means is arranged to be rotatable around the support structure, whereby a pivot axis is formed through the second end of the fastening means. By arranging the separating device to be pivotable, the solid pieces collected in the separating device may easily be emptied. The emptying may be done manually with the aid of a lever arm or a compressed-air cylinder. The emptying may also be automated so that the separating device is emptied at even predetermined intervals.

In this context an open leading means and an open separating device mean that both these construction elements are outside the melting furnace. Usually they are both in the shape of open troughs, along the lower parts of which the melt is led from one place to the next.

The described invention is especially suited for use in the manufacture of mineral fibres, where mineral melt is fed to a fiberising apparatus of cascade type. The fiberising apparatus usually comprises a series of rotating fiberising or spinning rotors, typically 3-4 rotors. The rotors usually rotate around a horizontal axis. Mineral melt from the melting furnace is directed toward the mantle surface of the first rotor where it gets a certain hold of the rotor's mantle surface before it is thrown out as a cascade of drops towards the mantle surface of the adjacent second rotor in the series. A part of the mineral melt then gets sufficient hold of the mantle surface of the second rotor in order to be formed into fibres due to the effect of the centrifugal force. Another part of the mineral melt is thrown further towards the mantle surface of the third rotor. In this way the mineral melt is "transported" as a jet of melt drops or a drop cascade, successively from one rotor to the subsequent one through the whole fiberising apparatus, while a part of the mineral melt is formed into mineral fibres. A binder may be applied on the formed mineral fibres, either during the fibre formation or after it. The mineral fibres formed at the fiberising rotors are transported away from the fiberising apparatus by means of blowing off. The blowing off of mineral fibres can be arranged by socalled primary blow-off means, which have been placed at the peripheries of the rotors or with secondary blow-off means, which have been arranged at a distance from the fiberising apparatus. The mineral fibres are transported from the fiberising apparatus through a collecting chamber towards a collecting member, which has been arranged in front of the fiberising apparatus. The collecting member can, for example, be a belt conveyor or a rotating drum.

Some embodiments of the invention are described in more detail below with reference to the enclosed figures, in which
- Figure 1: shows schematically a separating device according to an embodiment of the present invention arranged on a leading means, seen from the side,
- Figure 2: shows schematically a separating device according to another embodiment of the present invention arranged on a leading means, seen from above, and
- Figure 3: shows schematically a separating device according to a third embodiment of the present invention arranged on a leading means, seen in the longitudinal direction of the separating device.

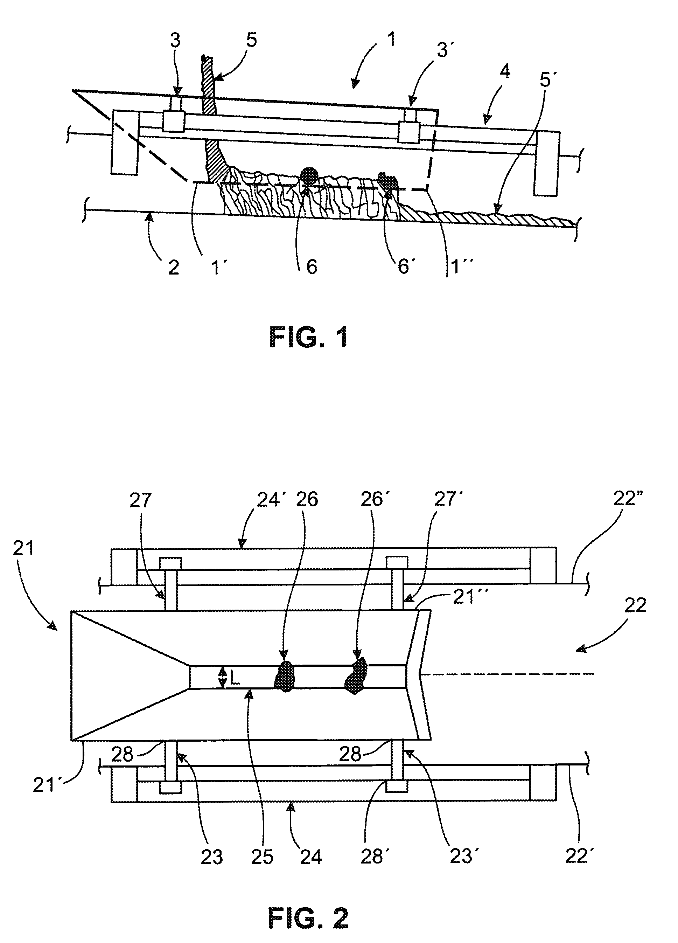

Figure 1 shows a separating device according to an embodiment of the present invention arranged on a leading means, seen from the side. The separating device 1 has been arranged on a leading means 2 with the aid of fastening means 3, 3', which are arranged around a support structure 4. The support structure is fastened to the side of the leading means 2. The mineral melt 5 is led from a melting furnace (not shown) to the separating device 1. The melt 5 runs through a gap, which has been arranged in the lower part of the separating device 1. Solid pieces 6, 6', which are larger than the opening of the gap, get stuck in the separating device 1 and are separated from the mineral melt which passes through the gap. The "purified" melt 5' is then transported onwards by the leading means 2.

The separating device 1' may be arranged on the leading means so that its first end 1' is on a higher level than its second end 1 ", i.e. the separating device is inclined in the flow direction of the melt.

Figure 2 shows a separating device according to another embodiment of the present invention arranged on a leading means, seen from above. The separating device 21 has been arranged on a leading means 22 with the aid of fastening means 23, 23', which are fastened at their first end 28 to the first wall 21' of the separating device and arranged at their second end 28' around a support structure 24. The support structure is fastened to the side of the leading means 22, to its first wall 22'. A gap 25 has been arranged between the walls 21', 21" of the separating device, through which gap the mineral melt is led. Solid pieces 26, 26', which are larger than the opening L of the gap, get stuck in the separating device 21 and are separated from the mineral melt which passes through the gap.

A support means 27, 27', which takes support against another support structure 24', has been arranged to the second wall 21 of the separating device 21. This support structure 24' is fastened to the second wall 22" of the leading means 22.

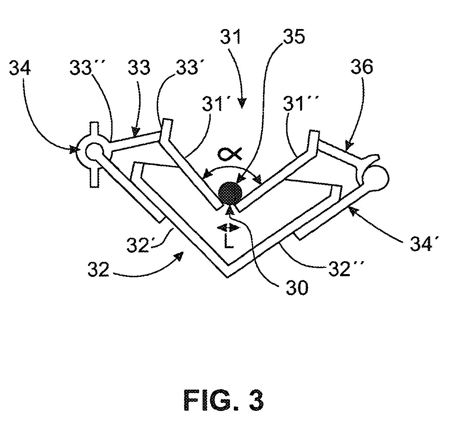

Figure 3 shows a separating device according to a third embodiment of the present invention arranged on a leading means, seen in the longitudinal direction of the separating device. The separating device 31 comprises the first and the second wall 31', 31 ", which have been arranged against each other in an angle α. A slit 30 has been arranged in the point of contact of the walls 31', 31 ". Solid pieces, which are larger that the width L of the slit 30, do not fit through the slit but will remain in the separating device 31.

The separating device 31 has been arranged on the leading means 32 with the aid of fastening means 33. The fastening means 33 is fastened at its first end 33' to the first wall 31' of the separating device 31. The second end 33" of the fastening means 33 has been arranged around a support structure 34, which is fastened to the first wall 32' of the leading means 32. The fastening means 33 may rotate around the support structure 34, whereby the separating device is pivoted around the pivot axis formed in the second end 33" of the fastening means 33. At the time of pivoting the separating device 31 is moved to the side of the leading means 32 and turned upside down. Then the solid piece 35 collected by the separating device falls out from the separating device 31 and the separating device becomes empty. After the emptying the separating device 31 may be returned back onto the leading means 32.

A support means 36, which takes support against another support structure 34', has been arranged to the second wall 31" of the separating device 31. This support structure 34' is fastened to the second wall 32" of the leading means 32.

## Claims

1. Method for removing solid pieces (6, 6', 26, 26') from a flow of mineral melt (5), in which method
- mineral melt (5) is led out from the melting furnace through an opening,
- mineral melt (5) is transported using a leading means (2, 22, 32), such as a melt trough, to a fiberising apparatus,
**characterised in that**
- the mineral melt (5) is led from the melting furnace first to a separating device (1, 21, 31), which separates solid pieces (6, 6', 26, 26') from the mineral melt (5) before it is led to the leading means (2, 22, 32), whereby
the mineral melt is (5) led in the separating device (1, 21, 31) through a slit (30) arranged in the longitudinal direction of the leading means (2, 22, 32), whereby solid pieces (6, 6', 26, 26') which do not fit through the opening of the slit (30) remain in the separating device (1, 21, 31) and purified mineral melt (5) is led to the leading means (2, 22, 32).

2. Method according to claim 1, **characterised in that** the separating device (1, 21, 31) is arranged on the leading means (2, 22, 32) with the aid of fastening means (3, 3', 23, 23', 33).

3. Method according to claim 2, **characterised in that** the separating device (1, 21, 31) is arranged to be pivotable.

4. Device for separating solid pieces (6, 6', 26, 26') from mineral melt (5), which device comprises
an elongated leading means (2, 22, 32), along which mineral melt (5) is led from a melting furnace to a fiberising apparatus in the longitudinal direction of the leading means (2, 22, 32),
**characterised in that** the device comprises a separating device (1, 21, 31) in the form of a trough, the longitudinal direction of which coincides with the longitudinal direction of the leading means (2, 22, 32), and wherein has been arranged a slit (30) in the longitudinal direction of the trough, whereby the separating device (1, 21, 31) has been arranged so that the melt (5) from the melting furnace is led first to the separating device (1, 21, 31) before it is led to the leading means (2, 22, 32).

5. Device according to claim 4, **characterised in that** the separating device (1, 21, 31) comprises
- a first and a second wall (21', 21 ", 31', 31 "), which have been arranged in a V-shape in an angular relationship to each other, and that
- a slit (30) has been arranged between the first and the second wall (21', 21", 31', 31 ") in the tip of the V.

6. Device according to claim 5, **characterised in that** the angle between the first and the second wall (21', 21 ", 31', 31 ") of the separating device (1, 21, 31) is 20-160°.

7. Device according to any of the claims 4-6, **characterised in that** the width of the slit (30) is 5-50 mm.

8. Device according to any of the claims 4-7, **characterised in that** the length of the separating device (1, 21, 31) in the transport direction of the melt (5) is 300-1500 mm.

9. Device according to any of the claims 4-8, **characterised in that** the separating device (1, 21, 31) comprises fastening means (3, 3', 23, 23', 33), with which it may be arranged on a leading means (2, 22, 32).

## Patentansprüche

1. Verfahren zum Entfernen von festen Stücken (6, 6', 26, 26') aus einem Strom einer Mineralschmelze (5), wobei in dem Verfahren:
- die Mineralschmelze (5) aus dem Schmelzofen durch eine Öffnung herausgeführt wird,
- die Mineralschmelze (5) unter Verwendung einer Führungseinrichtung (2, 22, 32), wie z.B. einer Schmelzwanne, zu einer Fasererzeugungsvorrichtung transportiert wird,
**dadurch gekennzeichnet, dass**
- die Mineralschmelze (5) aus dem Schmelzofen zuerst an eine Trennvorrichtung (1, 21, 31) geführt wird, welche feste Stücke (6, 6', 26, 26') aus der Mineralschmelze (5) abtrennt, bevor sie zu der Führungseinrichtung (2, 22, 32) geführt wird, wodurch
die Mineralschmelze (5) in die Trennvorrichtung (1, 21, 31) durch einen in der Längsrichtung der Führungseinrichtung (2, 22, 32) angeordneten Schlitz (30) eingeführt wird, wodurch feste Stücke (6, 6', 26, 26'), welche nicht durch die Öffnung des Schlitzes (30) passen, in der Trennvorrichtung (1, 21, 31) verbleiben, und gereinigte Mineralschmelze (5) zu der Führungseinrichtung (2, 22, 32) geführt wird.

2. Verfahren nach Anspruch 1, **dadurch gekennzeichnet, dass** die Trennvorrichtung (1, 21, 31) auf der Führungseinrichtung (2, 22, 32) mit der Hilfe von Befestigungseinrichtungen (3, 3', 23, 23', 33) angeordnet ist.

3. Verfahren nach Anspruch 2, **dadurch gekennzeichnet, dass** die Trennvorrichtung (1, 21, 31) schwenkbar angeordnet ist.

4. Vorrichtung zum Abtrennen von festen Stücken (6, 6', 26, 26') aus einer Mineralschmelze (5), wobei die Vorrichtung aufweist:
eine längliche Führungseinrichtung (2, 22, 32), entlang welcher die Mineralschmelze (5) aus einem Schmelzofen an eine Fasererzeugungsvorrichtung in der Längsrichtung der Führungseinrichtung (2, 22, 32) geführt wird,
**dadurch gekennzeichnet, dass** die Vorrichtung eine Trennvorrichtung (1, 21, 31) in der Form einer Wanne aufweist, deren Längsrichtung mit der Längsrichtung der Führungseinrichtung (2, 22, 32) zusammenfällt, und wobei ein Schlitz (30) in der Längsrichtung der Wanne angeordnet ist, wodurch die Trennvorrichtung (1, 21, 31) so angeordnet ist, dass die Schmelze (5) aus dem Schmelzofen zuerst zu der Trennvorrichtung (1, 21, 31) geführt wird, bevor sie in die Führungseinrichtung (2, 22, 32) geführt wird.

5. Vorrichtung nach Anspruch 4, **dadurch gekennzeichnet, dass** die Trennvorrichtung (1, 21, 31) aufweist:
- eine erste und eine zweite Wand (21', 21", 31', 31"), welche in einer V-Form in einer Winkelbeziehung zueinander angeordnet sind, und dass
- ein Schlitz (30) zwischen der ersten und zweiten Wand (21', 21", 31', 31") in der Spitze des V's angeordnet ist.

6. Vorrichtung nach Anspruch 5, **dadurch gekennzeichnet, dass** der Winkel zwischen der ersten und der zweiten Wand (21', 21", 31', 31") der Trennvorrichtung (1, 21, 31) 20 bis 160 Grad ist.

7. Vorrichtung nach einem der Ansprüche 4 bis 6, **dadurch gekennzeichnet, dass** die Breite des Schlitzes (30) 5 bis 50 mm ist.

8. Vorrichtung nach einem der Ansprüche 4 bis 7, **dadurch gekennzeichnet, dass** die Länge der Trennvorrichtung (1, 21, 31) in der Transportrichtung der Schmelze (5) 300 bis 1500 mm ist.

9. Vorrichtung nach einem der Ansprüche 4 bis 8, **dadurch gekennzeichnet, dass** die Trennvorrichtung (1, 21, 31) eine Befestigungseinrichtung (3, 3', 23, 23', 33) aufweist, mit welcher sie auf einer Führungseinrichtung (2, 22, 32) angeordnet werden kann.

## Revendications

1. Procédé permettant de retirer des morceaux solides (6, 6', 26, 26') à partir d'un écoulement d'une masse fondue minérale (5), procédé dans lequel :
- la masse fondue minérale (5) est amenée hors du four de fusion à travers une ouverture,
- la masse fondue minérale (5) est transportée en utilisant des moyens de guidage (2, 22, 32), tels qu'une goulotte de coulée de masse fondue, jusqu'à un dispositif de fibrage,
**caractérisé en ce que**
- la masse fondue minérale (5) est conduite à partir du four de fusion en premier lieu vers un dispositif de séparation (1, 21, 31), lequel sépare les morceaux solides (6, 6', 26, 26') de la masse fondue minérale (5) avant qu'elle ne soit conduite jusqu'aux moyens de guidage (2, 22, 32), de sorte que
la masse fondue minérale (5) est conduite dans le dispositif de séparation (1, 21, 31) à travers une fente (30) disposée suivant la direction longitudinale des moyens de guidage (2, 22, 32), de sorte que les morceaux solides (6, 6', 26, 26') qui ne peuvent pas passer à travers l'ouverture de la fente (30) restent dans le dispositif de séparation (1, 21, 31) et que la masse fondue minérale purifiée (5) est conduite jusqu'aux moyens de guidage (2, 22, 32).

2. Procédé selon la revendication 1, **caractérisé en ce que** le dispositif de séparation (1, 21, 31) est disposé sur les moyens de guidage (2, 22, 32) à l'aide de moyens de fixation (3, 3', 23, 23', 33).

3. Procédé selon la revendication 2, **caractérisé en ce que** le dispositif de séparation (1, 21, 31) est agencé en vue de pouvoir pivoter.

4. Dispositif pour séparer des morceaux solides (6, 6', 26, 26') à partir d'une masse fondue minérale (5), lequel dispositif comporte :
des moyens de guidage de forme allongée (2, 22, 32) le long desquels la masse fondue minérale (5) est conduite à partie d'un four de fusion jusqu'à un dispositif de fibrage suivant la direction longitudinale des moyens de guidage (2, 22, 32),
**caractérisé en ce que** le dispositif comporte un dispositif de séparation (1, 21, 31) en forme de goulotte de coulée, dont la direction longitudinale coïncide avec la direction longitudinale des moyens de guidage (2, 22, 32), et dans lequel une fente (30) a été agencée suivant la direction longitudinale de la goulotte, de sorte que le dispositif de séparation (1, 21, 31) se trouve disposé de telle sorte que la masse fondue (5) sortant du four de fusion soit conduite d'abord jusqu'au dispositif de séparation (1, 21, 31) avant qu'elle ne soit conduite jusqu'aux moyens de guidage (2, 22, 32).

5. Dispositif selon la revendication 4, **caractérisé en ce que** le dispositif de séparation (1, 21, 31) comprend :
- une première et une seconde paroi (21', 21", 31', 31"), lesquelles ont été agencées suivant une configuration en forme de V dans une relation inclinée l'une par rapport à l'autre, et **en ce que**
- une fente (30) a été agencée entre la première et la seconde paroi (21', 21", 31', 31") à la pointe du V.

6. Dispositif selon la revendication 5, **caractérisé en ce que** l'angle formé entre la première et la seconde paroi (21', 21", 31', 31") du dispositif de séparation (1, 21, 31) est de 20 à 160°.

7. Dispositif selon l'une quelconque des revendications 4 à 6, **caractérisé en ce que** la largeur de la fente (30) est de 5 à 50 mm.

8. Dispositif selon l'une quelconque des revendications 4 à 7, **caractérisé en ce que** la longueur du dispositif de séparation (1, 21, 31) dans la direction de transport de la masse fondue (5) est de 300 à 1500 mm.

9. Dispositif selon l'une quelconque des revendications 4 à 8, **caractérisé en ce que** le dispositif de séparation (1, 21, 31) comporte des moyens de fixation (3, 3', 23, 23', 33) à l'aide desquels il peut être disposé sur les moyens de guidage (2, 22, 32).
